# EUROPEAN PATENT APPLICATION

(11) **EP 4 772 858 A1**
(43) Date of publication of application: **08.07.2026**
(21) Application number: 25150507.9
(22) Date of filing: 07.01.2025
(51) Int. Cl.: G01N 21/17, G01N 29/24

(54) **PHOTOACOUSTIC GAS SENSOR, LEAKAGE DETECTION SYSTEM FOR REFRIGERANTS, AND HEAT PUMP**

(71) Applicant: Infineon Technologies AG, 85579 Neubiberg (DE); Technische Universität München, 80333 München (DE)
(72) Inventor: HAUFF, Michael, 81379 München (DE); TUMPOLD, David, 85551 Kirchheim beim München (DE); SPRENGEL, Heinz Stephan, 81673 München (DE); ESSING, Simon, 81369 Munich (DE)
(74) Representative: Infineon Patent Department

(57) **Abstract**

A photoacoustic gas sensor (100) comprises an emitter (110) configured to emit light, a sensor (120) configured to measure pressure variations and a measurement cell (130) enclosing the emitter and the sensor. At least a first ventilation opening (140a) and a second ventilation opening (140b) connect the measurement cell (130) with an environment (150).

## Description

### Field

The present disclosure relates to layouts of photoacoustic gas sensors.

### Background

A photoacoustic gas sensor detects gases by measuring sound waves generated when gas molecules absorb light. It works through the photoacoustic effect, where light energy is converted into acoustic signals. The sensor includes a light source, such as a laser or LED, tuned to the gas's specific absorption wavelength. When the light interacts with the gas in a sealed chamber, the gas molecules absorb the energy, causing them to heat up and expand. As the light source pulses, the gas repeatedly heats and cools, creating pressure waves that form sound waves. A sensitive microphone picks up these sound waves, converting them into electrical signals. The sensor's electronics analyze the signals to determine the gas concentration. Photoacoustic gas sensors are highly sensitive, capable of detecting even trace amounts of gas. They are widely used in environmental monitoring, industrial safety, and medical diagnostics due to their precision and reliability.

Photoacoustic gas sensors can be used for numerous applications having different requirements. CO₂ detection can tolerate longer response times because its concentration typically changes gradually in most applications, such as environmental monitoring or indoor air quality control. Unlike gases used in safety-critical scenarios (e.g., methane or refrigerants in gas leak detection), where immediate response is crucial to prevent accidents, CO₂ buildup occurs over minutes or hours. This slower dynamic allows for less frequent measurements and longer response times without compromising reliability or safety.

Photoacoustic gas sensors may have limited response times due to the time needed for gas exchange within the measurement chamber. When gas enters the chamber, it must reach a stable concentration before accurate detection can occur. Slow gas diffusion and inadequate ventilation further contribute to response time issues.

While conventional photoacoustic gas sensors may be principally suited for most applications, there may be a desire to provide designs having a faster response time.

### Summary

Some aspects of the present disclosure relate to a photoacoustic gas sensor, comprising an emitter configured to emit light, a sensor configured to measure pressure variations, a measurement cell enclosing the emitter and the sensor, and at least a first ventilation opening and a second ventilation opening connecting the measurement cell with an environment. Two smaller ventilation openings of a given area maintain better acoustic sealing than a single ventilation opening of the same area. A design having two or more ventilation openings may, therefore, increase the response time of the photoacoustic gas sensor because the diffusion speed is increased without significantly reducing detection sensitivity due to acoustic coupling of the measurement cell with the environment. Furthermore, multiple ventilation openings may allow for more flexible designs, such as ports on different sides of the sensor, enabling optimal gas flow from various directions in real-world installations.

According to an example, the photoacoustic gas sensor may comprise at least one membrane covering the ventilation opening. The membrane may act as a barrier to external sound waves, reducing interference from environmental noise. This helps to ensure that only acoustic signals generated by the gas absorption process are detected, improving sensor accuracy.

According to an example, the membrane covers both the first ventilation opening and the second ventilation opening. Using one membrane may simplify the manufacturing process, reducing production complexity, time, and cost compared to attaching separate membranes for each port.

For example, the membrane may be fixed to the measurement cell between the first ventilation opening and the second ventilation opening. By covering both openings simultaneously, the membrane ensures even gas flow while maintaining strong acoustic isolation. Fixing the membrane in this way reduces mechanical stress, preventing damage from environmental vibrations or pressure fluctuations. Further, acoustic excitation of the membrane itself is suppressed by fixing it to the measurement cell even in between the ventilation openings.

In various examples, the photoacoustic gas sensor may comprise a first membrane covering the first ventilation opening and a second membrane covering the second ventilation opening. Using two membranes may allow for more design flexibility, as the openings can be placed on different sides of the sensor, optimizing gas flow from multiple directions. The separation of membranes can fine-tune gas diffusion rates, enabling faster response times while maintaining strong acoustic isolation for accurate gas concentration measurements. Eventually, different membranes may be used.

In various examples, the emitter may be configured to emit light with a wavelength tuned to be absorbed by a refrigerant, in particular by at least one of the gases R32, R454B, and R290. Due to the increased response time, an embodiment of such a photoacoustic gas sensor may be used for leakage detection in safety critical applications.

According to an example, the sensor may comprise a MEMS microphone. Using a MEMS microphone may enable the detection of even tiny acoustic signals produced by low gas concentrations. Their small form factor allows the sensor to remain compact, making it suitable for space-constrained applications such as portable devices or integrated system components. MEMS microphones consume minimal power. Furthermore, MEMS technology is robust and resistant to environmental factors such as temperature variations and mechanical vibrations, ensuring long-term performance.

An aspect of the present disclosure relates to a leakage detection system for refrigerants, comprising at least on photoacoustic gas sensor.

Another aspect of the present disclosure relates to a heat pump or an air conditioning system comprising a leakage detection system.

### Brief description of the Figures

Some examples of apparatuses and/or methods will be described in the following by way of example only, and with reference to the accompanying figures, in which
Fig. 1 illustrates an embodiment of a photoacoustic gas sensor;
Fig. 2 illustrates a further embodiment of a photoacoustic gas sensor having a different layout of ventilation openings;
Fig. 3 illustrates a further embodiment of a photoacoustic gas sensor having ventilation openings in a substrate; and
Fig. 4 illustrates examples of different layouts of ventilation openings.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

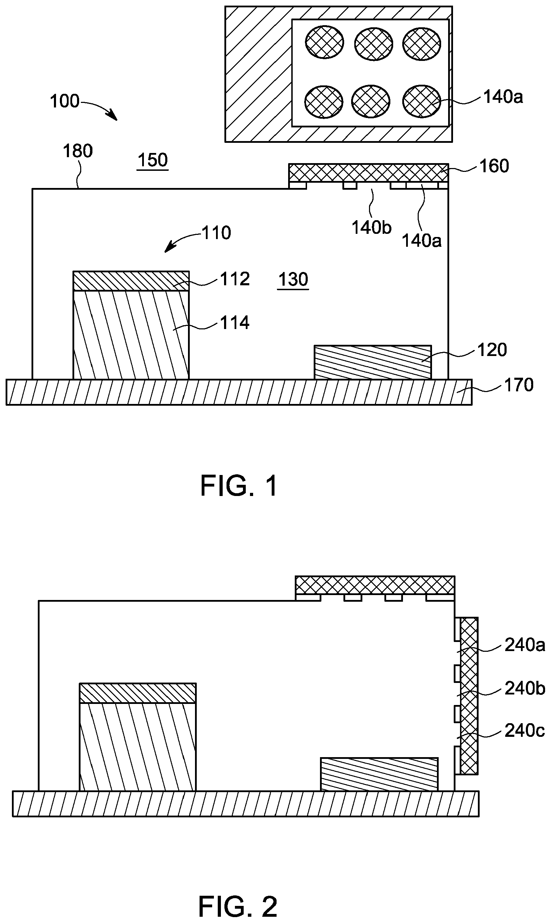

Fig. 1 an embodiment of a photoacoustic gas sensor 100.

The photoacoustic gas sensor 100 comprises an emitter 110 configured to emit light and a sensor 120 configured to measure pressure variations. A measurement cell 130 encloses the emitter 110 and the sensor 120. The photoacoustic gas sensor 100 exhibits at least a first ventilation opening 140a and a second ventilation opening 140b, each ventilation opening connecting the measurement cell 130 with an environment 150. The environment is a volume surrounding the photoacoustic gas sensor 100 which is to be monitored for the existence and the concentration of specific gas tapes within the environment. The emitter 110 and the sensor 120 are mounted on a substrate 170 such as on a Printed Circuit Board (PCB). A housing 180 is mounted on the substrate. The housing and the substrate delineate the measurement cell 130.

In the embodiment illustrated in fig. 1, the sensor 120 configured to measure pressure variations in the photoacoustic gas sensor is a MEMS microphone. A MEMS microphone is a pressure-sensitive device designed to detect sound waves, which are pressure variations in the air. Inside a MEMS microphone, there is a thin, flexible diaphragm suspended above a fixed backplate. When sound waves or pressure variations reach the microphone, they cause the diaphragm to vibrate. The distance between the diaphragm and the backplate changes with these vibrations, creating a change in capacitance or resistance, depending on the microphone design. This change is then converted into an electrical signal that the sensor can process. Within the photoacoustic gas sensor 100, when gas molecules absorb light from the sensor's emitter 110, they heat up and expand, causing periodic pressure waves within the measurement cell 130. The MEMS microphone 120 detects these pressure variations as sound waves. Since the waves are directly related to the concentration of the target gas, the sensor can interpret the electrical signals generated by the MEMS microphone 120 to determine gas concentration. The MEMS microphone 120 functions as a precise and sensitive pressure sensor, making it a good choice for photoacoustic gas sensing applications.

For photoacoustic gas sensor, an arbitrary amount of ventilation openings 140a, 140b are possible. For example, the embodiment of fig. 1 exhibits 6 ventilation openings. In a photoacoustic gas sensor 100, a ventilation opening is a small passage connecting the sensor's measurement cell 130, where gas detection occurs, to the external environment 150. These openings allow gas molecules from the surrounding air to flow into and out of the sensor, enabling the detection of gas concentrations through the photoacoustic effect. The primary function of a ventilation opening is to facilitate gas exchange, ensuring that the target gas can reach the measurement cell for accurate detection. Additionally, the design of the ventilation opening helps block external noise while still allowing gas molecules to pass through. This ensures that the sensor detects only the acoustic signals generated by the gas inside the measurement cell, resulting in more accurate measurements. Ventilation openings may also serve to balance internal and external pressure, keeping the sensor stable even when environmental conditions change.

To provide further protection and acoustic isolation, these ventilation openings are covered with a membrane 160 that let gas through while blocking dust, moisture, and other contaminants, thus extending the sensor's lifespan. As opposed to the holes in a membrane 160 that allow gas diffusion, the size of the ventilation openings is significantly larger. According to some embodiments, a maximal extension of a ventilation opening may be within the interval starting at 0,2mm and ending at 2mm. In other embodiments and for other applications, the maximal extension of a ventilation opening may be larger than 0,1mm but smaller than any one of 0,5 mm, 0,8mm, 1,0mm, 1,2mm, 1,4mm, 1,6mm or 1,8mm.

The maximum extension of a ventilation opening refers to its largest measurable dimension, indicating the widest point of the opening. This measurement helps define the size and capacity of the opening, influencing gas flow, acoustic isolation, and overall sensor performance. For a circular opening, the maximum extension is its diameter, which is the distance across the circle, passing through its center. For example, if a circular opening has a diameter of 1.5 mm, its maximum extension is 1.5 mm. For an elliptical opening, the maximum extension is its major axis, which is the longest distance across the ellipse, passing through its center. For instance, if an elliptical opening has a major axis of 2 mm and a minor axis of 1 mm, its maximum extension is 2 mm.

The size of a ventilation opening significantly impacts sensor performance. Smaller openings provide better protection against external noise but slow down gas exchange, while larger openings allow faster gas flow but may increase the risk of noise interference. Therefore, designing the size and number of these openings involves balancing fast response times, accurate measurements, and long-term reliability.

The membrane 160 may, for example, be formed by conventional membranes (such as PTFE) and of microstructured materials (such as MEMS structures) that allow gas diffusion. Conventional membranes, like PTFE (polytetrafluoroethylene), are often used due to their chemical resistance, gas permeability, and environmental protection capabilities. These membranes have micro-porous structures that enable gas molecules to pass through while blocking larger particles, dust, and moisture. Similarly, MEMS-based microstructured materials can serve the same purpose but are fabricated using advanced semiconductor processes. MEMS membranes can be engineered with precise, microscale openings, allowing controlled gas diffusion. Additionally, they offer advantages such as mechanical stability, durability, and integration with electronic components. Both types of membranes function by permitting gas flow while providing environmental protection and acoustic isolation.

In some embodiments, the emitter 110 may comprise a light source 112 and a filter 114. The filter 114 is tuned to transmit a specific wavelength of light. The light source 112 generates a broader spectrum of light, while the filter 114 allows only the desired wavelength to pass through. This selective wavelength is chosen based on the absorption characteristics of the target gas. When the filtered light enters the measurement cell 130, gas molecules that absorb this specific wavelength heat up, causing pressure changes due to thermal expansion. These pressure variations generate sound waves that are detected by the sensor's microphone. Using a filter improves the sensor's selectivity and accuracy, ensuring that only the wavelength corresponding to the gas of interest is emitted into the measurement cell. This design minimizes interference from other gases and environmental factors, enabling precise gas concentration measurements.

In fig. 1, the first ventilation opening 140a and the second ventilation opening 140b are in a top portion of the housing, the top portion being opposite to the substrate 170.

While the shape of the housing 180 and of the resulting measurement cell is rectangular in figs. 1 to 3, further embodiments may also have different shapes of housing 180. For example, the top portion of the housing 180 may not be parallel to the substrate. In some embodiments, the shape of the housing may not even by symmetrical about a plane or an axis.

As already elaborated on previously, using multiple smaller ventilation openings as opposed to one larger one may not only increase the diffusion speed of the gas to be detected but also increase the flexibility in design.

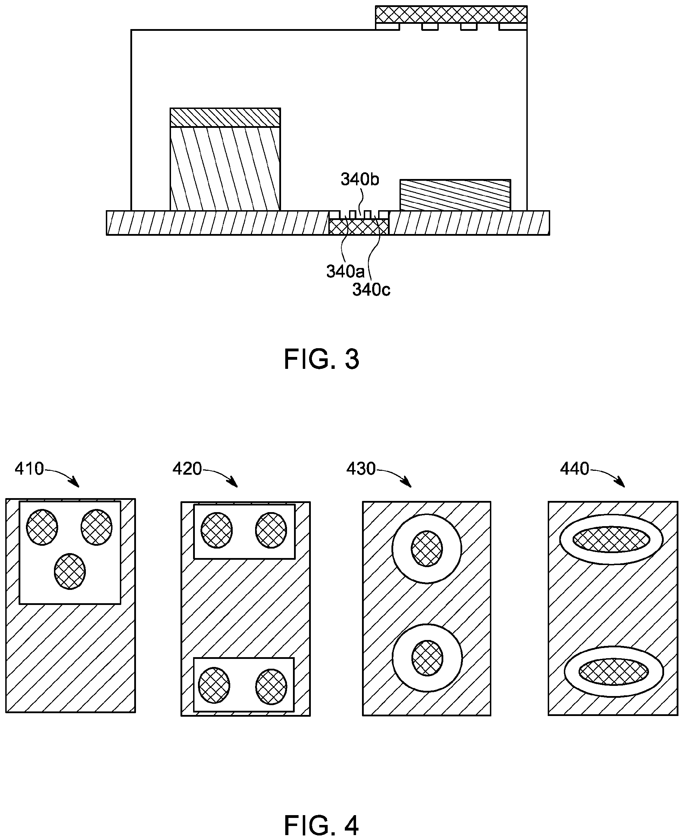

Figs. 2 and 3, therefore, illustrate some additional possibilities where the ventilation openings may be placed, while fig. 4 illustrates possible different shapes of the ventilation openings.

Since figs. 2 and 3 are based on the same layout of the photoacoustic gas sensor 100, only the further positions of ventilation openings are shortly elaborated on.

Further to the ventilation openings in fig. 1, the embodiment of fig. 2 exhibits further ventilation openings 240a, 240b and 240c in a side portion of the housing that extends from the surface of the substrate.

The embodiment of fig. 3 exhibits further ventilation openings 340a, 340b and 340c in the substrate.

Fig. 4 illustrates different possible geometries of ventilation openings and layouts of membranes, just to illustrate the flexibility of the approach.

Layout 410 has four circular ventilation openings covered by a single membrane. Layout 420 has four circular ventilation openings that air pairwise covered by a membrane. In layout 430, two circular ventilation openings are covered by distinct membranes. While layout 440 does also use separate membranes, the shape of the ventilation openings is elliptical.

A particularly interesting application for a photoacoustic gas sensor of the previously described type is refrigerant leakage detection in heat pumps and air conditioning systems. This use case is driven by a combination of environmental, safety, and economic factors.

From an environmental perspective, refrigerants such as R32, R454B, and R290 have a high global warming potential (GWP) if released into the atmosphere. Increasingly strict environmental regulations require the reduction of refrigerant emissions. A photoacoustic gas sensor can detect even small leaks in real time, minimizing environmental impact and helping manufacturers comply with these regulations. In terms of safety, certain refrigerants, such as R290 are flammable. Detecting leaks early prevents the buildup of dangerous gas concentrations, reducing the risk of fires or explosions in residential, commercial, and industrial systems.

The photoacoustic gas sensors described offer high sensitivity, selectivity, and long-term stability. Their ability to detect gas concentrations well below flammability limits ensures early leak detection. Unlike other technologies, they do not require frequent calibration or a reference gas, making them ideal for long-term, maintenance-free operation.

From an economic standpoint, detecting refrigerant leaks early helps reduce maintenance costs and prevents system performance degradation. This results in energy savings, extended system lifespan, and lower operating costs. These combined benefits make photoacoustic gas sensors according to the embodiments described previously a compelling choice for modern heat pumps and air conditioning systems.

The photoacoustic gas sensors described previously exhibit a fast response time of the sensor to rising concentration levels. Further, they offer an accurate, low noise measurement of a low fraction of the flammability limit (e.g. 0.5% LFL). Using an embodiment of a photoacoustic gas sensor may result in fast response times (e.g. <15s), still providing sufficient acoustic attenuation (e.g.>50dB).

In other words, conventional photoacoustic gas sensors are focused on CO2 measurement for indoor air quality measurements. In such an application, response time is not as critical as it is in leakage applications. Conventional implementations relate to single holes with MEMs diffusor and single holes with PTFE Membrane, leading to response times of 30s to 2 minutes.

For leakage application a response time of ~10s may be needed. While further sensor concepts like NDIR, MOX or Thermal Conductivity (TC) van be built to respond faster because there is no need for good acoustic attenuation, they exhibit other drawbacks, such as a bad selectivity of gases (MOX, TC) and the requirement of a reference channel (NDIR).

The embodiments described herein relate to a PAS Sensor for Leakage Gases as R32, R454B, R290. To reach the response times needed for this application, it has more than one gas port. Each port is sealed by a diffusive membrane (e.g. PTFE, Si, ceramics) to maintain good acoustic attenuation. The hole dimensions (radius) may be in a range of 200µ - 2000µm. This introduces the general advantages of PAS Technology into the application, which is a high selectivity on a target Gas, the lack of the requirement of a reference channel and a high accuracy at reasonable costs.

The aspects and features described in relation to a particular one of the previous examples may also be combined with one or more of the further examples to replace an identical or similar feature of that further example or to additionally introduce the features into the further example.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A photoacoustic gas sensor (100), comprising:
an emitter (110) configured to emit light;
a sensor (120) configured to measure pressure variations;
a measurement cell (130) enclosing the emitter and the sensor; and
at least a first ventilation opening (140a) and a second ventilation opening (140b) connecting the measurement cell (130) with an environment (150).

2. The photoacoustic gas sensor (100) of claim 1, wherein a maximum extension of a ventilation opening is within the interval starting at 0,2mm and ending at 2mm.

3. The photoacoustic gas sensor of any one of claims 1 or 2, further comprising at least one membrane (160) covering the ventilation opening.

4. The photoacoustic gas sensor (100) of claim 3, wherein the membrane (160) covers both the first ventilation opening (140a) and the second ventilation opening (140b).

5. The photoacoustic gas sensor (100) of claim 4, wherein the membrane (160) is fixed to the measurement cell between the first ventilation opening (140a) and the second ventilation opening (140b).

6. The photoacoustic gas sensor (100) of claim 3, comprising a first membrane covering the first ventilation opening and a second membrane covering the second ventilation opening.

7. The photoacoustic gas sensor (100) of any one of claims 1 to 6, further comprising:
a substrate (170), wherein the emitter (110) and the sensor (120) are mounted on the substrate; and
a housing (180) mounted on the substrate (170), wherein the housing and the substrate (170) delineate the measurement cell (130).

8. The photoacoustic gas sensor (100) of claim 7, wherein at least one of the first ventilation opening (140a) and the second ventilation (140b) opening are in a top portion of the housing, the top portion being opposite to the substrate (170).

9. The photoacoustic gas sensor (100) of claim 7 or 8, wherein at least one of the first ventilation opening (140a) and the second ventilation opening (140a) are in a side portion of the housing, the side portion extending from the surface of the substrate (170).

10. The photoacoustic gas sensor (100) of any one of claims 7 to 9, wherein at least one of the first ventilation opening and the second ventilation opening are in the substrate (170).

11. The photoacoustic gas sensor (100) of any one of claims 1 to 10, wherein the emitter (110) is configured to emit light with a wavelength tuned to be absorbed by a refrigerant, in particular by at least one of the gases R32, R454B, and R290.

12. The photoacoustic gas sensor (100) of claim 11, wherein the emitter (110) further comprises a filter (112) tuned to transmit the wavelength.

13. The photoacoustic gas sensor (100) of any one of claims 1 to 12, wherein the sensor (120) comprises a MEMS microphone.

14. A leakage detection system for refrigerants, comprising at least on photoacoustic gas sensor (100) according to any one of claims 1 to 13.

15. A heat pump or an air conditioning system comprising a leakage detection system according to claim 14.

## Amended claims

### Amended claims in accordance with Rule 137(2) EPC.

1. A photoacoustic gas sensor (100), comprising:
an emitter (110) configured to emit light;
a sensor (120) configured to measure pressure variations;
a measurement cell (130) enclosing the emitter and the sensor;
at least a first ventilation opening (140a) and a second ventilation opening (140b) connecting the measurement cell (130) with an environment (150); and
further comprising a first membrane covering the first ventilation opening and a second membrane covering the second ventilation opening.

2. The photoacoustic gas sensor (100) of claim 1, wherein a maximum extension of a ventilation opening is within the interval starting at 0,2mm and ending at 2mm.

3. The photoacoustic gas sensor (100) of any one of claims 1 or 2, further comprising:
a substrate (170), wherein the emitter (110) and the sensor (120) are mounted on the substrate; and
a housing (180) mounted on the substrate (170), wherein the housing and the substrate (170) delineate the measurement cell (130).

4. The photoacoustic gas sensor (100) of claim 3, wherein at least one of the first ventilation opening (140a) and the second ventilation (140b) opening are in a top portion of the housing, the top portion being opposite to the substrate (170).

5. The photoacoustic gas sensor (100) of claim 3 or 4, wherein at least one of the first ventilation opening (140a) and the second ventilation opening (140a) are in a side portion of the housing, the side portion extending from the surface of the substrate (170).

6. The photoacoustic gas sensor (100) of any one of claims 3 to 5, wherein at least one of the first ventilation opening and the second ventilation opening are in the substrate (170).

7. The photoacoustic gas sensor (100) of any one of claims 1 to 6, wherein the emitter (110) is configured to emit light with a wavelength tuned to be absorbed by a refrigerant, in particular by at least one of the gases R32, R454B, and R290.

8. The photoacoustic gas sensor (100) of claim 7, wherein the emitter (110) further comprises a filter (112) tuned to transmit the wavelength.

9. The photoacoustic gas sensor (100) of any one of claims 1 to 8, wherein the sensor (120) comprises a MEMS microphone.

10. A leakage detection system for refrigerants, comprising at least on photoacoustic gas sensor (100) according to any one of claims 1 to 9.

11. A heat pump or an air conditioning system comprising a leakage detection system according to claim 10.
